# DEMANDE DE BREVET EUROPEEN

(11) **EP 2 302 628 A1**
(43) Date de publication de la demande: **30.03.2011**
(21) Numéro de dépôt: 10177598.9
(22) Date de dépôt: 20.09.2010
(51) Int. Cl.: G11B 7/125, G11B 7/24

(54) **Lecteur de disque optique en super-résolution et procédé de lecture optimisée par mesure de réflectivité**

(30) Priorité: 29.09.2009 FR 0904641
(71) Demandeur: Commissariat à l'Énergie Atomique et aux Énergies Alternatives, 75015 Paris (FR)
(72) Inventeur: Laulagnet, Fabien, 38600, FONTAINE (FR); Armand, Marie-Françoise, 38410, VAULNAVEYS LE HAUT (FR); Fargeix, Alain, 38330, MONTBONNOT SAINT MARTIN (FR); Hyot, Bérangère, 38320, EYBENS (FR)
(74) Mandataire: Guérin, Michel

(57) **Abrégé**

L'invention concerne le domaine de l'enregistrement optique d'informations sur un support tel qu'un disque optique.

Pour lire un disque optique en mode de super-résolution, on met en oeuvre un procédé d'optimisation de la puissance du faisceau laser de lecture. Cette optimisation repose sur la constatation de l'existence d'une corrélation entre la puissance permettant de lire sans risque en mode de super-résolution et la réflectivité de la couche sensible contenant les informations. On mesure la réflectivité (R) du disque optique pour plusieurs valeurs de puissance (P) du laser de lecture, on détermine une puissance critique (P_{deg}) en fonction des mesures de réflectivité effectuées, et on sélectionne, en fonction de la puissance critique, une puissance de lecture suffisamment supérieure à la puissance critique pour sortir clairement d'une zone de puissances présentant des risques.

## Description

L'invention concerne le domaine de l'enregistrement optique d'informations sur un support tel qu'un disque optique.

Les informations sont en principe stockées sur le support sous forme de marques physiques qui sont des singularités de dimensions contrôlées qui présentent un contraste optique permettant la lecture par un système de détection à faisceau laser.

Les marques physiques peuvent être des empreintes formées par moulage d'un substrat en polycarbonate (DVDROM par exemple) ; elles sont alors enregistrées une fois pour toutes ; elles peuvent être également constituées par des zones enregistrées dans des couches sensibles par l'action d'un faisceau lumineux d'écriture ; l'enregistrement peut alors être réversible (effacement possible, voire ré-enregistrement) ou irréversible (pas d'effacement possible ni de réécriture).

Lorsqu'on cherche à accroître la densité d'informations enregistrées sur un disque optique, on est en général limité par les performances du dispositif de lecture des informations. Le principe de base est que l'on ne peut pas lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6 on ne peut normalement pas espérer lire correctement des informations de dimension inférieure à 0,3 micromètre.

Cependant, des méthodes dites de super-résolution ont été imaginées pour lire des informations dont la dimension physique est inférieure à la limite de résolution optique (LR = (λ/4).NA) où λ est la résolution et NA l'ouverture numérique de l'optique de focalisation du laser. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. Le laser de lecture lui-même va modifier localement les propriétés optiques du matériau par des effets thermiques, optiques, thermo-optiques et/ou optoélectroniques sur des dimensions plus petites que la dimension du spot laser de lecture ; du fait du changement de propriété, une information présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Par exemple, dans le cas de disques à super résolution, on a une augmentation locale de la réflectivité sur une zone plus petite que le diamètre du faisceau laser. C'est cette modification due aux propriétés optiques non linéaires qui va permettre la lecture de plus petites marques normalement indétectables.

Dans une précédente demande de brevet, déposée sous le numéro FR 0700938 le 9 février 2007, on a proposé une structure de stockage optique fonctionnant en super-résolution. Cette structure comprend un substrat (de préférence en polycarbonate) pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂).

Cette structure est favorable parce qu'elle nécessite une puissance laser de lecture relativement faible pour lire les informations en super-résolution avec un rapport signal/bruit satisfaisant. Or la question de la puissance de lecture est critique car, d'un côté, une puissance suffisamment élevée est nécessaire pour obtenir un effet de super-résolution par changement localisé de propriétés optiques, mais d'un autre côté une puissance trop élevée tend à détruire progressivement l'information enregistrée, limitant le nombre de cycles de lecture possible alors qu'on souhaite un nombre de cycles de lecture aussi élevé que possible.

En faisant des essais sur ces structures à base de InSb ou GaSb entre deux couches de ZnS-SiO₂, on a cependant constaté que le choix de la puissance de lecture n'était pas simple, en ce sens qu'une puissance trop faible ne permet pas la lecture en super-résolution, une puissance trop forte est inutile ou dangereuse pour la conservation des informations ou même du support optique, et il semble qu'il existe une zone de puissance intermédiaire, inférieure à la puissance optimale qui permet la super-résolution, pour laquelle les informations stockées sont irrémédiablement dégradées par le laser de lecture.

Cette constatation a été faite à partir de mesures répétées sur des échantillons comportant des marques régulièrement réparties, enregistrées en super-résolution.

Il est donc souhaitable de prévoir que le système de lecture des informations optiques comporte des moyens pour optimiser la puissance du laser de lecture en prenant en compte ce risque de dégradation irréversible des informations pour les puissances intermédiaires inférieures à cette puissance optimale. Et il est souhaitable que ces moyens ne mettent pas en jeu eux-mêmes une puissance de lecture qui serait dans la zone à risque de dégradation.

C'est pourquoi on propose un lecteur de disque optique comportant un laser de lecture et fonctionnant en mode de super-résolution, adapté à la lecture de disques optiques dont la structure comprend un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂) le lecteur étant **caractérisé en ce qu**'il comporte des moyens pour faire varier la puissance du laser de lecture, des moyens pour mesurer une réflectivité d'une couche sensible du disque optique pour au moins quatre valeurs de puissance émise par le laser de lecture, des moyens de calcul pour déterminer, dans un plan de représentation de la réflectivité en fonction de la puissance, une puissance critique (P_{deg}) située à un point d'intersection d'une droite joignant les mesures de réflectivité pour deux puissances et d'une droite joignant les mesures de réflectivité pour deux autres puissances, et une puissance de lecture souhaitable située au-dessus de la puissance critique, et des moyens pour appliquer cette puissance pour une lecture ultérieure d'informations présentes sur le disque.

Les moyens de calcul comprennent de préférence des moyens pour sélectionner une puissance de lecture égale à k fois la puissance critique (P_{deg}), k étant un nombre égal à au moins 1,1 et de préférence compris entre 1,1 et 1,4.

Les mesures de réflectivité peuvent être faites pour deux valeurs de puissance inférieures à une puissance indicative (P_{ind}) spécifiée par le fabricant du lecteur ou du disque, et pour deux valeurs de puissance supérieures à cette puissance de consigne.

La mesure de réflectivité est de préférence faite dans une zone dédiée du disque optique, cette zone ne comportant pas d'informations utiles autres que celles qui sont nécessaires à la mesure ; on réitère de préférence les mesures de réflectivité et la sélection d'une puissance de lecture à chaque nouvelle introduction d'un disque dans le lecteur.

L'invention concerne également un procédé de lecture correspondant à ces principes. Le procédé selon l'invention comporte une mesure de la réflectivité du disque optique pour au moins quatre valeurs de puissance du laser de lecture, une détermination d'une puissance critique (P_{deg}) en fonction des mesures de réflectivité effectuée, et la sélection, en fonction de la puissance critique, d'une puissance de lecture (PL) supérieure à la puissance critique pour des lectures ultérieures d'informations contenues dans le disque.

D'autres caractéristiques et avantages de l'invention apparaîtront à la lecture de la description détaillée qui suit et qui est faite en référence aux dessins annexés dans lesquels :
- la figure 1 représente un exemple de structure d'un disque optique ;
- la figure 2 représente une vue au microscope à force atomique d'un substrat dans lequel ont été préformées des marques de 80 nanomètres minimum espacées de 80 nanomètres minimum ;
- la figure 3 représente une courbe de réflectivité mesurée pour cette structure, en fonction de la puissance du laser de lecture ;

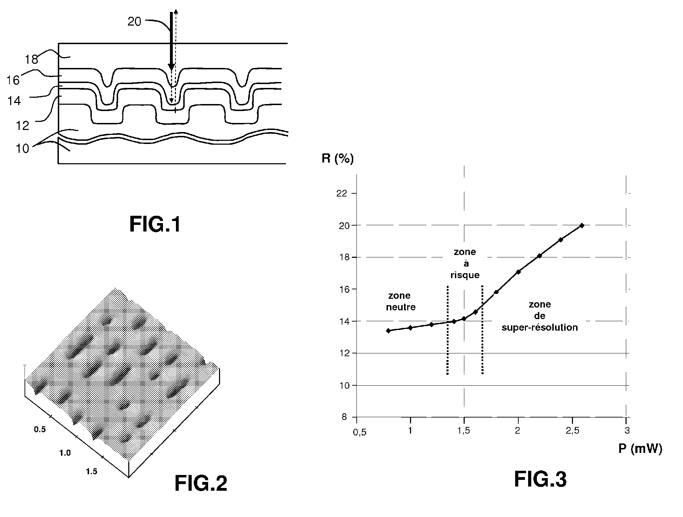

Sur la figure 1, on a représenté la structure générale d'un disque optique pouvant être lu en mode de super-résolution. Il comprend un substrat 10, qui est de préférence un matériau organique, et notamment du polycarbonate classiquement utilisé pour des disques optiques. Les informations sont classiquement inscrites dans le disque sur des pistes sensiblement concentriques ; un faisceau laser de lecture, symbolisé par la flèche 20, placé devant le disque, verra les informations défiler devant lui lors de la rotation du disque.

Le substrat 10 comporte des marques physiques définissant l'information enregistrée, et dans cet exemple les marques physiques sont constituées sous forme d'un relief imprimé à la surface supérieure du substrat. Le relief est par exemple constitué de creux dont la largeur est à peu près fixe pour toutes les informations inscrites, mais dont la longueur et l'espacement, dans le sens de défilement des informations, définissent le contenu de l'information inscrite. La lecture des informations se fait par analyse de la phase du faisceau laser réfléchi par la structure, phase qui varie au début et à la fin du passage de chaque marque physique. Les creux peuvent être préenregistrés par pressage du polycarbonate ou du substrat plastique par exemple à l'aide d'un moule en nickel qui a été réalisé à partir d'outils de gravure à faisceaux d'électrons de très haute résolution.

La largeur, la longueur, l'espacement des marques physiques peuvent être inférieures à la résolution optique théorique du système optique de lecture qui servira à les lire. Typiquement, s'il s'agit d'un laser bleu de longueur d'onde 400 nanomètres environ, utilisé avec une optique de focalisation dont l'ouverture numérique est de 0,85, la limite physique théorique de résolution est de l'ordre de 120 nanomètres en prenant des précautions. Ici, les marques peuvent être préenregistrées avec une résolution, en longueur ou en espacement, inférieure à 80 nanomètres. La figure 2 représente une vue schématique des marques physiques en relief ainsi enregistrées sur un disque.

Dans le cas d'un disque optique classique, on recouvrirait le relief d'une simple couche d'aluminium, mais cette couche d'aluminium ne permettrait pas de détecter avec un laser bleu des marques de dimensions et d'espacement égal à 80 nanomètres.

Pour permettre une telle détection, on recouvre les marques d'une structure sensible permettant une détection en super-résolution. La structure comprend une triple couche constituée dans l'ordre par une couche diélectrique 12 de composé ZnS-SiO₂, une couche 14 d'antimoniure d'indium (InSb) ou antimoniure de gallium (GaSb), et une couche diélectrique 16 de composé ZnS-SiO₂. L'ensemble est recouvert par une couche de protection transparente 18. La couche 14 en InSb ou GaSb est une couche à propriétés optiques non linéaires.

Un tel disque peut être lu par un lecteur comprenant un laser bleu émettant un faisceau de puissance de 1 à 3 milliwatts environ (correspondant en pratique à une densité de puissance d'environ 7 milliwatts par micromètre carré).

Mais la structure sensible est fragile et on a constaté que les informations inscrites pouvaient se dégrader pour certaines gammes de puissances, soit trop élevées, soit même inférieures à la puissance qui est nécessaire pour pouvoir effectuer la lecture en super-résolution. Il faut donc essayer d'éviter que le laser de lecture n'émette une puissance provoquant des risques de dégradation. Le fabricant de lecteur de disques prévoira en principe un fonctionnement à une puissance qui minimise les risques. La puissance sera donc calibrée en fonction des indications du fabricant de disques ou des normes relatives à ces disques lorsqu'elles existeront.

Cependant, un tel calibrage n'optimise pas le choix de la puissance si on considère qu'il peut y avoir des variations de la puissance optimale en fonction des fabricants ou du procédé industriel de fabrication, ou même en fonction des séries fabriquées par un même fabricant et par le même procédé.

En faisant des expérimentations sur des structures sensibles permettant un fonctionnement en super-résolution, on a constaté qu'il existait une relation entre la réflectivité de la couche sensible et la puissance émise par le faisceau laser de lecture ; la réflectivité augmente lentement avec la puissance pour les puissances faibles qui ne permettent pas une lecture en super-résolution ; elle augmente beaucoup plus vite pour les puissances plus élevée qui permettent une telle lecture. Et, il existe une zone de puissance intermédiaire dans laquelle la pente de variation n'est pas stable et augmente progressivement.

La figure 3 représente une courbe de la réflectivité de la couche sensible en fonction de la puissance du faisceau laser émis pour la lecture. La puissance est en milliwatts, la réflectivité est en pourcentage de la puissance renvoyée par rapport à la puissance émise ; le faisceau laser émet à une longueur d'onde de 405 nanomètres. Pour la couche sensible qui correspond à cette courbe, on peut lire en super-résolution à partir d'une puissance d'environ 1,5 milliwatts, alors qu'au-dessous de cette puissance on ne peut pas lire les marques trop petites en raison de l'absence d'effet de super-résolution. Or on constate que la pente de variation de la réflectivité en fonction de la puissance est globalement relativement faible dans la zone située au-dessous de 1,5 milliwatts, et est relativement forte au-dessus de 1,5 milliwatts. On peut observer une corrélation entre la possibilité de lire en super-résolution et la réflectivité.

D'autre part, on a observé que la zone de changement de pente de la réflectivité correspond justement à une zone à risque, en ce sens que le laser de lecture qui a une puissance située dans cette zone risque de dégrader irrémédiablement les informations inscrites, pour des raisons tenant à l'échauffement du matériau et à des effets optiques encore mal expliqués. La zone à risque est située entre environ 1,2 milliwatts et 1,7 milliwatts, et on constate que c'est la zone pour laquelle il y a la variation de pente la plus rapide de la courbe qui représente la réflectivité en fonction de la puissance du laser de lecture.

Selon l'invention, le lecteur de disque est pourvu de moyens pour mesurer la réflectivité de la couche sensible qui permet la lecture en mode de super-résolution, des moyens pour faire varier la puissance transmise, des moyens de calcul pour déterminer une puissance souhaitable en fonction des mesures de réflectivité, et des moyens pour appliquer cette puissance pour une lecture ultérieure d'informations présentes sur le disque.

On mesure donc la réflectivité de la couche sensible pour un ensemble de points de mesure et on en déduit la position de la zone à risque et on peut ensuite sélectionner une puissance hors de la zone à risque.

La méthode préférée consiste à mesurer la réflectivité pour deux valeurs de puissance faibles (situées a priori au-dessous de la zone à risque) à mesurer la réflectivité pour deux valeurs fortes (situées a priori au-dessus de la zone à risque, à déterminer le point d'intersection des droites définies par les deux premières mesures et par les deux autres mesures, ce point d'intersection correspondant à une puissance qu'on appellera puissance de dégradation P_{deg} qui est située en plein dans la zone à risque, et enfin à sélectionner une puissance de lecture PL suffisamment supérieure à P_{deg} pour qu'on sorte clairement par le haut de la zone à risque. La sélection de la puissance de lecture PL consiste en pratique à choisir PL=k.P_{deg}, k étant un coefficient supérieur à 1,2 et de préférence compris entre 1,2 et 1,5.

En effectuant une mesure de réflectivité sur des puissances situées a priori hors de la zone à risque, on évite d'appliquer une puissance qui dégraderait le matériau de la couche sensible.

Le procédé est de préférence le suivant :
- on part d'une puissance indicative P_{ind}, annoncée par le fabricant du disque optique comme étant une puissance présentant des risques de dégradation significatifs ; cette puissance est par exemple P_{ind} = 1,5 milliwatts ;
- on mesure la réflectivité pour au moins deux puissances Pm1 et Pm2 situées nettement au-dessous de la puissance indicative P_{ind}, et pour au moins deux autres puissances Pm3 et Pm4 situées nettement au-dessus de la puissance indicative P_{ind} ;
- des deux premières mesures on déduit une droite représentant une approximation de variation linéaire de réflectivité pour les puissances basses, et des deux autres mesures on déduit une droite représentant la variation de réflectivité pour les puissances hautes ; on détermine un point d'intersection de ces deux droites et on considère que la puissance pour ce point est une puissance P_{deg} représentant plus précisément la puissance de dégradation au cas où la puissance indicative P_{ind} ne serait pas exacte ;
- à partir de la puissance P_{deg} ainsi déterminée, on sélectionne une puissance de lecture PL égale à k.P_{deg} où k est un coefficient multiplicateur supérieur à 1 permettant de s'assurer que la puissance de lecture est clairement située en dehors de la zone de dégradation.

Le coefficient k est supérieur à 1,1 et de préférence compris entre 1,1 et 1,4. Typiquement, il peut être de 1,2.

Les puissances de mesure basses peuvent être typiquement Pm1 = k1*P_{ind} et Pm2 = k2*P_{ind}, avec k1 et k2 compris entre 0,3 et 0,6=8 et avec k2/k1 de préférence supérieur à 1,1. Les puissances de mesure haute Pm3 = k3.P_{ind} et Pm4 = k4.P_{ind} avec k3 et k4 compris entre 1,20 et 1,6 et k4/k3 de préférence supérieur à 1,1.

Dans l'exemple de la couche photosensible ayant la courbe de variation de réflectivité de la figure 3 et une puissance indicative de dégradation P_{ind} = 1,5 milliwatts, on prendrait par exemple Pm1 = 0,8 milliwatt, Pm2 = 1,2 mW, Pm3 = 1,8 mW, et Pm4 = 2,4 mW. On trouve une intersection de droite pour un puissance P_{deg} = 1,4 mW.

Si on choisit par exemple k=1,3, on sélectionnera une puissance de lecture PL= 1,82 milliwatts. Avec un coefficient k=1,5 on aurait une marge de sécurité plus grande pour sortir de la zone à risque et on sélectionnerait une puissance de lecture de 2,1 mW.

Des mesures expérimentales sur des structures de couches sensibles commercialisées permettront de savoir quelle valeur de k permet d'assurer une sécurité suffisante pour tenir compte de la dispersion des fabrications de disque. Un nombre k trop petit risque de conduire à une puissance de lecture qui ne sort pas suffisamment de la zone de dégradation. Un nombre k trop grand conduit à une puissance de lecture excessive par rapport aux besoins de la lecture en super-résolution.

Les tests sont faits dans une zone de disque optique réservée à cet effet, ne comportant pas d'informations utiles mais comportant des marques physiques d'un motif prédéterminé enregistrées en super-résolution, ou ne comportant pas de marques du tout.

La mesure se fait avec le disque en rotation à une vitesse qui correspond à la vitesse linéaire normalisée (typiquement une vitesse donnant un débit de 66Mbits/seconde). Si le disque doit être lu à plus haute vitesse, il faut réaliser un test à plus haute vitesse car la puissance optimale dépend de la vitesse de défilement des marques sous le faisceau laser. Plus généralement, un test pour plusieurs vitesses est préconisé.

On effectuera le test par exemple à chaque nouvelle introduction d'un disque optique dans le lecteur.

## Revendications

1. Lecteur de disque optique comportant un laser de lecture et fonctionnant en mode de super-résolution, adapté à la lecture de disques optiques dont la structure comprend un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium, le lecteur étant **caractérisé en ce qu'**il comporte des moyens pour faire varier la puissance du laser de lecture, des moyens pour mesurer une réflectivité d'une couche sensible du disque optique pour au moins quatre valeurs de puissance, des moyens de calcul pour déterminer, dans un plan de représentation de la réflectivité en fonction de la puissance, une puissance critique (P_{deg}) située à un point d'intersection d'une droite joignant les mesures de réflectivité pour deux puissances et d'une droite joignant les mesures de réflectivité pour deux autres puissances, et une puissance de lecture souhaitable (PL) située au-dessus de la puissance critique, et des moyens pour appliquer cette puissance pour une lecture ultérieure d'informations présentes sur le disque.

2. Lecteur de disque selon la revendication 1, **caractérisé en ce que** les moyens de calcul comprennent des moyens pour sélectionner une puissance de lecture égale à k fois la puissance critique (P_{deg}), k étant un nombre égal à au moins 1,1 et de préférence compris entre 1,1 et 1,4.

3. Lecteur de disque selon la revendication 2, **caractérisé en ce que** les mesures de réflectivité sont faites pour deux valeurs de puissance inférieures à une puissance indicative (P_{ind}) spécifiée par le fabricant du lecteur ou du disque, et pour deux valeurs de puissance supérieures à cette puissance de consigne.

4. Lecteur de disque selon l'une des revendications 1 à 3 **caractérisé en ce que** les moyens pour effectuer la mesure de réflectivité sont agencés pour effectuer la mesure dans une zone dédiée d'un disque lu par le lecteur, cette zone ne comportant pas d'informations utiles autres que destinées à la mesure.

5. Lecteur de disque selon l'une des revendications 1 à 4, **caractérisé en ce que** les moyens de mesure de réflectivité, de calcul, et d'application d'une puissance sélectionnée au laser de lecture sont agencés pour effectuer la mesure, le calcul, et l'application de la puissance sélectionnée à chaque nouvelle introduction d'un disque dans le lecteur.

6. Procédé de lecture de disque optique au moyen d'un laser de lecture fonctionnant en mode de super-résolution, adapté à la lecture de disques optiques dont la structure comprend un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium, **caractérisé en ce qu'**il comporte une mesure de la réflectivité du disque optique pour au moins quatre valeurs de puissance du laser de lecture, une détermination d'une puissance critique (P_{deg}) située, dans un plan de représentation de la réflectivité en fonction de la puissance, à un point d'intersection d'une droite joignant les mesures de réflectivité pour les deux puissances les plus faibles et d'une droite joignant les mesures de réflectivité pour les deux puissances les plus élevées, et la sélection d'une puissance de lecture (PL) supérieure à la puissance critique pour des lectures ultérieures d'informations contenues dans le disque.

7. Procédé de lecture selon la revendication 6, **caractérisé en ce que** la sélection de puissance de lecture comprend la sélection d'une puissance égale à k fois la puissance critique (P_{deg}), k étant un coefficient égal à au moins 1,1 et de préférence compris entre 1,1 et 1,4.

8. Procédé de lecture selon l'une des revendications 6 et 7, **caractérisé en ce que** les mesures de réflectivité sont faites pour deux valeurs de puissance inférieures à une puissance indicative (P_{ind}) spécifiée par le fabricant du lecteur ou du disque, et pour deux valeurs de puissance supérieures à cette puissance indicative.

9. Procédé de lecteur selon l'une des revendications 6 à 8, **caractérisé en ce que** la mesure de réflectivité est effectuée dans une zone dédiée d'un disque lu par le lecteur, cette zone ne comportant pas d'informations utiles destinées à être lues dans les opérations de lecture ultérieures à la puissance de lecture sélectionnée.

10. Procédé de lecture selon l'une des revendications 6 à 9, **caractérisé en ce que** la mesure de réflectivité, de calcul, la détermination de la puissance critique (P_{deg}) et la sélection d'une puissance de lecture (PL) sont effectuées à chaque nouvelle introduction d'un disque dans le lecteur.
